Europäisches Patentamt

(19) European Patent Office

Office européen des brevets

(11) Publication number: **0 188 646**
**B1**

(12) **EUROPEAN PATENT SPECIFICATION**

(45) Date of publication of patent specification: **27.12.89**

(21) Application number: **85100687.4**

(22) Date of filing: **24.01.85**

(51) Int. Cl.⁴: **H 02 M 3/335**

(54) **Single regulation power supply with load compensation of an auxiliary voltage output.**

(43) Date of publication of application:
**30.07.86 Bulletin 86/31**

(45) Publication of the grant of the patent:
**27.12.89 Bulletin 89/52**

(84) Designated Contracting States:
**DE FR GB IT**

(56) References cited:
**EP-A-0 048 934**
**DE-A-3 024 721**

(73) Proprietor: **BULL HN INFORMATION SYSTEMS ITALIA S.p.A.**
**Via Martiri d'Italia 3**
**I-10014 Caluso (Torino) (IT)**

(72) Inventor: **Montorfano, Gianpaolo**
**Cuore Immacolato di Maria, 2**
**I-20141 Milano (IT)**

## Description

The present invention relates to a single regulation power supply with load compensation of an auxiliary voltage output.

Multiple output power supplies are well known and widely used in the electronic industry.

The most sophisticated and expensive ones provide for independent regulation of each output, or in case, for precise voltage regulation of a main output, with some consequential regulation effect on auxiliary outputs too, and post regulation circuits on the auxiliary outputs to achieve the desired regulation level.

In several cases, it is essential to limit the cost of the power supplies and to this purpose voltage regulation is performed on the auxiliary outputs.

In order to minimize "cross regulation" which is a deceiving term to indicate more than regulation, the changes caused in an auxiliary unregulated output by load variation at the main regulated output, the arrangement is often used, by which the auxiliary voltages at the auxiliaries output are obtained as a sum of the regulated main voltage output and unregulated secondary voltage outputs.

In this manner a fraction of the auxiliary voltage is precisely regulated and unaffected by load changes at the main or auxiliary outputs, and "cross regulation" is reduced at some extent.

An example of such multiple output power supplies is discussed in the article "A multiple output converter with load compensated gain to achieve stability under light or no loading conditions" by K. H. Kuster, published in Intelec, International Telecommunication Energy Conference, Washington D.C. U.S.A., 3—6 Oct. 1982 p. 125—130.

However the effect of load changes at the auxiliary outputs seems to be unavoidable unless some form of post-regulation is added to the main regulation.

To overcome this limitation in the european patent application EP—A—0048934 it is proposed to provide as input to a voltage regulation circuit the combination of the effective voltage of a main output and a voltage obtained from both the main output and an auxiliary output through voltage divider of suitable ration. Some form of compensation is achieved with the trade off of a control circuit which requires voltage divider and a multiple input regulator. The present invention overcomes such limitation and provides a very simple and unexpensive means to achieve a load compensation of an unregulated auxiliary output through the regulation of a main output voltage and with the trade off of a slight and generally acceptable degradation of the main output voltage regulation characteristic.

Briefly stated this result is achieve in a single regulation power supply of the converter type having a main regulated output and a secondary unregulated output series connected to the main output to provide an auxiliary output voltage by the insertion in the regulation loop of the main output of a resistor passed through by the load current of the auxiliary output, the value of such resistor having a preestablished relation with the internal resistence of the main output voltage generator and the secondary output voltage generator. The regulation loop controls the sum of the voltage at the main output with the voltage drop on such resistor, keeping the summing voltage constant.

The voltage at the main output differs from the regulated voltage by the minimum amount of voltage drop on the resistor, and good regulation characteristics are maintained.

These and other features of the invention, together with the advantages deriving therefrom become more readily apparent from the following description of a preferred form of the invention embodiment and from the enclosed drawings where:

Figure 1 is a circuit diagram of a power supply known in the prior art.

Figure 2 is a diagram showing the relation among the voltage at an auxiliary output and the current load in the power supply of Figure 1.

Figure 3 is the equivalent circuit diagram for the output stages of the power supply of Figure 1.

Figure 4 is the circuit diagram of the power supply of Figure 1 modified according to a preferred embodiment of the invention.

Figure 5 is the equivalent circuit diagram of the output stages of the power supply of Figure 4.

Figure 6 is a schematic diagram showing an alternative embodiment of the invention.

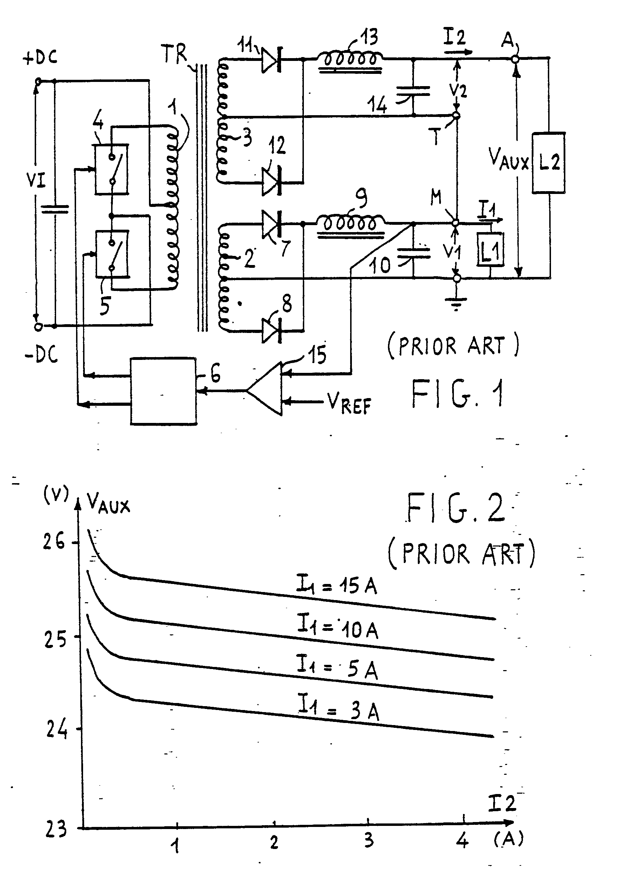

Figure 1 shows in simplified circuit diagram a power supply of the converter type, having two outputs.

The power supply comprises a transformer TR having a center tapped primary winding 1, a center tapped main secondary winding 2 and a center tapped auxiliary secondary winding 3.

The center tap of primary winding 1 is connected to a +DC terminal.

The terminals of primary winding 1 are each connected to a −DC terminal through switch 4, 5 respectively.

The center tap of secondary winding 2 is connected to ground and the terminals are each connected through a diode 7, 8 respectively and through an inductor 9 to a main output terminal M.

A capacitor 10 is connected between terminal M and ground.

The center tap T of secondary winding 3 is connected to main output terminal M.

The terminals of secondary winding 3 are each connected, through a diode 11, 12 respectively and through an inductor 13 to an auxiliary output terminal A.

A capacitor 14 is connected between terminal A and terminal M.

An unregulated DC input voltage VI is applied between the input terminals +DC, −DC.

2

The two switches 4, 5 are controlled by a pulse width modulator 6 to switch on in mutually exclusive way, thus allowing an energizing current to alternatively flow in each of the half portions of primary winding during periodic time intervals of controlled duration. The alternating voltage pulses induced in secondary winding 2 are rectified by diodes 7, 8 filtered by LC network 9, 10 and provide a main output voltage $V_1$ between terminal M and ground.

Terminal M is connected to a signal input of an error amplifier 15 receiving a reference voltage level $V_{REF}$ at a reference input.

The error amplifier 15 provides an error signal to a control input of pulse width modulator 6, which in turn controls the time on, time off interval of switches 4, 5 so as to keep $V_1$ very close to the reference voltage $V_{REF}$ and practically constant, irrespective of voltage changes in the input voltage VI and/or changes in the main load connected to output M and shown as $L_1$.

The alternating voltage pulses induced in secondary winding 3, are rectified by diodes 11, 12, filtered by LC network 13, 14 and provide a secondary output voltage $V_2$ between terminal A and terminal M. An auxiliary voltage $V_{AUX}$ is available between terminal A and ground to feed a second load shown as $L_2$.

The auxiliary voltage $V_{AUX}$ has the following peculiarities.

It is the sum of V2 and V1, which is a regulated voltage.

Therefore that portion of $V_{AUX}$ which is represented by $V_1$, is unaffected by voltage changes of VI, nor by load changes of $L_1$, $L_2$.

Further that portion of $V_{AUX}$ which is represented by $V_2$, is still unaffected by VI changes, which are recovered by the regulation loop at the advantage of $V_2$ too.

This peculiarity is well known to the people skilled in the art and is further explained in analytical terms, by the above mentioned article.

In spite of this remarkable advantage, the described power supply has the limitation that $V_2$, hence $V_{AUX}$ is affected by load changes both at the main output M as well as at the auxiliary output A.

By way of example Figure 2 shows a typical family of curbes, expressing $V_{AUX}$ (hence $V_2$) as a function of the current $I_1$ (taken as parameter), drained by the main load $L_1$, and of the current $I_2$ drained by the load $L_2$ at the auxiliary output, for power supply designed to provide a main output, regulated voltage of +5V within a load range $I_1$ from 3 to 15 amperes, and an auxiliary output voltage, nominally 25V within a load range $I_2$ from 0,5 to 4 Amperes.

A similar family of curbes may be drawn where $V_{AUX}$ is expressed as a function of current $I_1$ and current $I_2$ is taken as parameter.

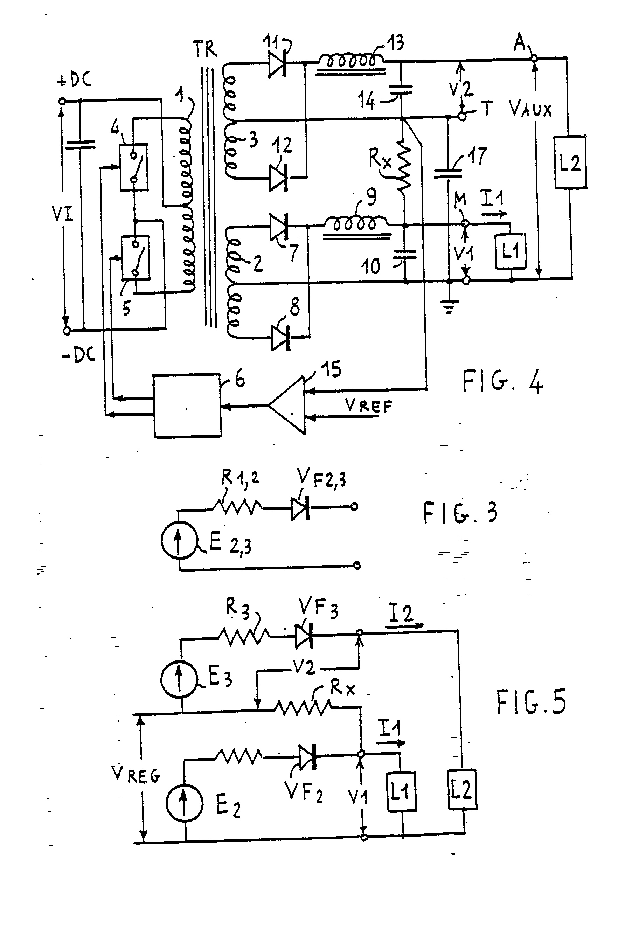

Such curbes indicates that in the operating range defined above, $V_{AUX}$ is a linear function of $I_1$, $I_2$, and confirm the theoretical approach explained in the above mentioned article, that the output stages of the power supply shown in Fig. 1 may each be represented by the equivalent circuit shown in Fig. 3.

Each secondary winding 2, 3 acts as a perfect voltage generator $E_{2,3}$. Each diode acts as a fixed voltage drop $V_{F2,3}$ (the forward voltage drop of each diode).

The resistive component of each secondary winding 2, 3 and each inductor 13, 9 acts as a resistor $R_{1,2}$.

It must be reminded that in the operating range of the power supply there is a continuous current flowing through the secondary winding, the diodes and the inductor, averaging the output current drained from the circuit, with a minimum ripple around such value.

This is no more true for very low or no load applied to the output, which give reason for the non linear dependence of $V_{AUX}$ from $I_1$, $I_2$, when the value of such currents is close to zero.

The index 2, 3 affixed to the components of the equivalent circuit relates the components to the main output stage (index 2) or to the secondary output stage (index 3).

There is a relation between the input voltage VI and each of the induced electromotive forces $E_2$, $E_3$, which is of no interest here, and which may be found in the above mentioned article.

More important, there is also a fixed relation between $E_2$, $E_3$ and namely

$$E_2/E_3 = N_2/N_3$$

where $N_2/N_3$ is the turn ratio of the winding 2 as to the secondary winding 3.

These considerations will be useful for understanding the core of the invention.

According to the invention the power supply shown in Fig. 1, is modified as shown in Fig. 4.

Since the change is minimal, the overall structure of the power supply is not described any more and the same reference numbers relates each of the elements shown in Fig. 4 to the equivalent component shown in Fig. 1.

The circuit of Fig. 4 differs from the one of Fig. 1 only in that center tap T of secondary winding 3 is connected to terminal M of the main output stage through a resistor $R_X$ and in that the signal input of error amplifier 15 is connected to center tap T instead of terminal M.

By this arrangement regulation is no more performed on the main output voltage $V_1$ but on a voltage which differs from the main output voltage for the voltage drop VD occurring in resistor $R_X$, given by

$$VD = R_X I_2$$

where $I_2$ is the current drained at the auxiliary output A. By this arrangement and with a proper selection of

resistor $R_X$ value, the auxiliary voltage $V_{AUX}$ can be rendered completely independent from $I_2$.

Fig. 5 shows the equivalent circuit for the embodiment of Fig. 4, as can be easily drawn from the considerations previously developed. From the equivalent circuit of Fig. 5, where the regulated voltage is $V_{REG}$ instead of $V_1$ it is clear that:

$$V—R_X I_2 = V_{REG} \text{ Constant (1)}$$

$$V_1 = E_2—IR_2 (I_1 + I_2)—V_{F2} \text{ (2)}$$

$$V_2 = E_3—R_3 I_2—V_{F3} \text{ (3)}$$

$$V_{AUX} = V_{REG} + V_2 \text{ (4)}$$

Reminding that $E_2/E_3 = N_2/N_3$ and using equation (2) to express $E_2$ it is possible to express $E_3$ in (3) as follows:

$$V_2 = N_3/N_2(V_1 + R_2(I_1 = I_2) + V_{F2})—R_2 I_2—V_{F3} \text{ (5)}$$

Therefore
$$V_{AUX} = V_{REG} + N_3/N_2(V_1 + R_2(I_1 +I_2) + V_{F2})—R_3 I_2—V_{F3} \text{ (6)}$$

By using equation (1) it is possible to express $V_1$ in (6) as a function of $I_2$ as follows:

$$V_{AUX} = V_{REG} + N_3/N_2(V_{REG} + R_X I_2 + R_2(I_1 + I_2) + V_{F2})—R_3 I_2 I V_{F3} \text{ (7)}$$

In (7) $V_{REG}$, $V_{F2}$, $V_{F3}$ are constant and $V_{AUX}$ is clearly dependent on $I_1$ and $I_2$.
In order to have $V_{AUX}$ independent from $I_2$ it suffices that:

$$N_3/N_2(R_X + R_2)—R_3 = 0$$

that is:
$$R_X = N_2/N_3 R_3—R_2 \text{ (8)}$$

Equation (8) shows that for a value of $R_2 = N_2/N_3 R_3$ the value of $R_X$ may be rendered equal to 0.
In this case the power supply is inherently compensated for auxiliary output load changes.

Unfortunately, a transformer and inductor sizing meeting this requirement is generally feasible, only at detriment of the power supply efficiency and involve severe losses in the main output winding. Therefore the adoption of an additional resistor $R_X$ is the only practical way to achieve the desired result.

Obviously this result is achieved with the trade off of some degradation in the regulation characteristics of the main output voltage, which degradation is however acceptable because $R_X$ can practically have a value in the order of tenths of milliohm.

Further the arrangement does not provide compensation for load changes at the main output.

Notwithstanding that, the arrangement is particularly useful in all cases where the main load is substantially constant, whilst the load at the auxiliary output is widely variable. Several electronic equipments require this kind of powering:

a fixed power is drained for powering logical components, typically at a voltage of +5V, whilst a variable power at higher voltage of +12 ÷ 25V is required to energize intermittently electromechanical devices.

A typical example may be found in electronic printers and personal EDP systems, which may require the powering of logical circuits at +5V with current load of 10 Amp. substantially constant, whilst the energization of the printer head, and printer motors, may require powering at +25V with current load variable between 1 to 4 Amp.

A power supply may be designed according to the diagram of Fig. 4, which in order to achieve high efficiency privileges the copper sizing of the main output winding and filter, against the sizing of the auxiliary winding.

This may lead to a value of $R_2 = 30$ mΩ against a value of $R_3 = 250$ mΩ with $N_2/N_3 = 6$ so that $R_X$ must be selected to have value

$$R_X = 6/21 \cdot 250—30 \simeq 41,5 \text{ mΩ}$$

This means that the level of $V_1$ is affected by load changes at the auxiliary output by no more than $R_X(I_{2MAX} - I_{2MIN}) = 41,5 \cdot 3 = 124,5$ mV. In a conventional power supply as the one shown if Fig. 1 the sizing above of the coils would have been resulted in $V_1 = V_{REG} = $ Constant, but the level of $V_2$ would have been affected by load changes at the auxiliary output in the much larger amount of about 430 mV.

It is clear that in order to minimize voltage changes of both $V_1$ as well as $V_2$ and to limit them in the

4

same percentual range, or any preestablished ratio thereof, a partial compensation may be adopted. For instance, considering the same numerical value of the example before, $R_x$ may be selected to have a value of 17 mΩ, by which changes of $V_1$ are contained within 51 mV (1% of 5V) and changes of $V_2$ are contained within 246 mV (1% of 25V).

It is clear that Fig. 4 shows a preferred embodiment of the invention and that several changes can be made without departing from the scope of the invention.

The embodiment of Fig. 4 provides a common ground level for both the main output as well as the auxiliary output.

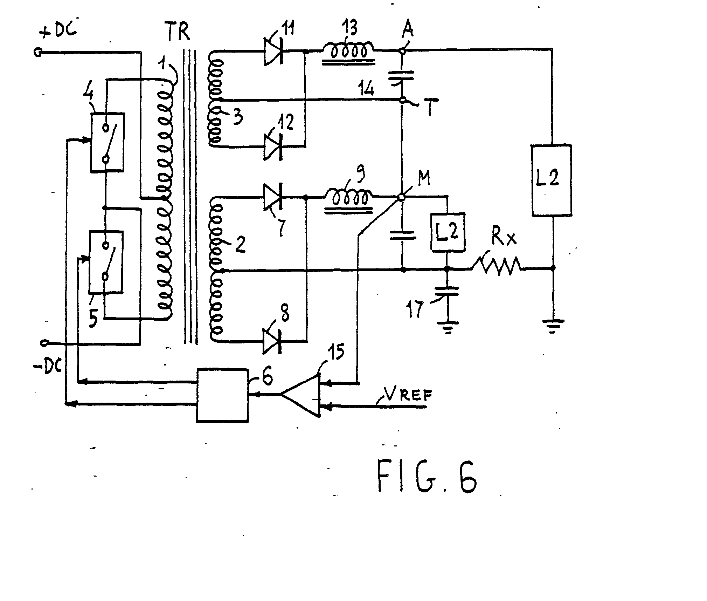

If there is no such requirement, the embodiment may be modified as shown in Fig. 6 where it is schematically indicated that resistor $R_x$ is on the ground connection side of the auxiliary output, instead of the connection point between main output stage and secondary output stage.

With this arrangement it is clear that the secondary output stage needs not to be series connected with the main output stage and can provide an auxiliary output voltage independently from the main output voltage.

By the same token, whilst the power supply has been shown as a full wave converter, it may take the form of a half way converter, and the windings, which have been shown as center tapped, may be single windings provided with suitable rectifying bridges at the output, and suitably driving circuits at the input.

Any combination thereof is obviously also feasible. Further the turnon/turnoff ratio of the energizing pulse may be changed, for regulation purpose either by means of pulse width modulation circuits as well as by means of frequency modulation circuits.

In conclusion the core of the invention resides, for a power supply converter where pulses fed to the input of a transformer induce pulses in winding of a main output section and in a winding of an auxiliary output section, the voltage at the main output being regulated through a control loop which senses the voltage at the main output and control the pulsed energization of the power supply, in the inclusion in the control loop of a resistor for sensing the current load at the auxiliary output, the voltage drop across said resistor being algebraically added to the main output voltage.

A small capacity capacitor 17, is preferably added in parallel to resistor $R_x$, (or between tap T and ground, as shown in Fig. 4) for the purpose of achieving stability of the control loop and rendering it unsensitive to sudden changes in the auxiliary output load $L_2$.

## Claims

1. Single regulation power supply with load compensation of an auxiliary voltage output ($V_{AUX}$), wherein power is transferred from the primary winding of a transformer to a first and a second secondary windings, the secondary windings being respectively connected to a first and a second rectifying and filtering network respectively providing at a first and a second output of first ($V_1$) and a second DC voltage (V2), a control loop sensing said first DC voltage source ($V_1$) and controlling current pulses fed to said primary winding by controlled switching devices (4, 5) so as to keep said first DC voltage at a preestablished level, characterized by that it comprises a resistor ($R_x$), crossed by the current drained from said second output, and said control loop senses the algebraic sum of said first DC voltage source and the voltage drop across said resistor ($R_x.I_2$).

2. Single regulation power supply as claimed in claim 1 wherein said resistor has a value R not greater than $N_2/N_3.R_3—R_2$ where $N_2/N_3$ is the turn ratio of said first and second secondary winding and $R_2$, $R_3$ are the equivalent resistance of said first and second secondary windings and associated filtering network respectively.

## Patentansprüche

1. Einfach geregelte Stromversorgungsschaltung mit Lastkompensation eines Hilfsspannungsausgangs ($V_{AUX}$), wobei die Leistrung von der Primärwicklung eines Transformators auf eine erste und eine zweite Sekundärwicklung übertragen wird, welche an eine erste bzw. zweite Gleichrichterschaltung angeschlossen sind, die eine erste (V1) und eine zweite (V2) Gleichspannung liefern, und wobei ein Steuerkreis die erste Gleichspannungsquelle (V1) überwacht und Stromimpulse steuert, welche der Primärwicklung durch gesteuerte Schalter (4, 5) zugeführt werden, um die erste Gleichspannung auf einem vorgegebenen Pegel zu halten, dadurch gekennzeichnet, daß ein von dem dem zweiten Ausgang entnommenen Strom durchflossener Widerstand ($R_x$) vorgesehen ist und der Steuerkreis die algebraische Summe aus der ersten Gleichspannung und dem Spannungsabfall ($R_x.I_2$) am genannten Wiederstand erfaßt.

2. Stromversorgungsschaltung nach Anspruch 1, bei welcher der Widerstand einen Wert R nicht größer als $N_2/N_3.R_3—R_2$ hat, wobei $N_2/N_3$ das Windungszahlverhältnis der ersten und zweiten Sekundärwicklungen ist und $R_2$, $R_3$ die äquivalenten Widerstände der ersten.bzw. zweiten Sekundärwicklung und der jeweils zugeordneten Filterschaltung sind.

**Revendications**

1. Alimentation à régulation unique avec compensation de charge d'une sortie de tension auxiliaire ($V_{AUX}$), dans laquelle la puissance est transférée de l'enroulement primaire d'un transformateur à un premier et un deuxième enroulement secondaire, les enroulements secondaires étant respectivement connectés à un premier et un deuxième réseau de redressement et de filtrage fournissant respectivement à une première et une deuxième sortie une première ($V_1$) et une deuxième ($V_2$) tension continues une boucle de commande détectant cette première source de tension continue ($V_1$) et commandant des impulsions de courant alimentant cet enroulement primaire par des dispositifs de commutation commandés (4, 5) de façon à conserver cette première tension continue à un niveau préétabli, caractérisée en ce qu'elle comprend une résistance ($R_X$), traversée par le courant drainé de cette deuxième sortie et en ce que cette boucle de commande détecte la somme algébrique de cette première source de tension continue et de la chute de tension aux bornes de cette résistance ($R_X.I_2$).

2. Alimentation à régulation unique, comme revendiqué dans la revendication 1, dans laquelle cette résistance a une valeur R inférieure à $N_2/N_3.R_3-R_2$, où $N_2/N_3$ est le rapport des spires de ces premier et deuxième enroulements secondaires et $R_2$ et $R_3$ sont les résistances équivalentes de ces premier et deuxième enroulements secondaires et du réseau de filtrage associé, respectivement.

6

(PRIOR ART)

FIG. 1

FIG. 2
(PRIOR ART)

$I_1 = 15 A$

$I_1 = 10 A$

$I_1 = 5 A$

$I_1 = 3 A$

EP 0 188 646 B1

FIG. 4

FIG. 3

FIG. 5

FIG. 6